# EUROPÄISCHE PATENTSCHRIFT

(11) **EP 1 679 565 B1**
(45) Veröffentlichungstag und Bekanntmachung des Hinweises auf die Patenterteilung: **08.02.2012**
(21) Anmeldenummer: 05027378.8
(22) Anmeldetag: 14.12.2005
(51) Int. Cl.: G05B 19/39, E05F 15/10

(54) **Vorrichtung zur Steuerung eines Torantriebs**
Control device for a door operator
Système de contrôle pour une commande de porte

(30) Priorität: 04.01.2005 DE 202005000058 U; 28.01.2005 DE 202005001410 U
(43) Veröffentlichungstag der Anmeldung: 12.07.2006
(73) Patentinhaber: Marantec Antriebs- und Steuerungstechnik GmbH & Co. KG., 33428 Marienfeld (DE)
(72) Erfinder: Hörmann, Michael, 33790 Halle (Westfalen) (DE)
(74) Vertreter: Thoma, Michael

(56) Entgegenhaltungen:
- DE-A1- 4 413 098
- DE-A1- 19 522 622
- JP-A- 4 357 412
- US-B1- 6 177 771

## Beschreibung

Die vorliegende Erfindung betrifft eine Vorrichtung zur Steuerung eines Torantriebs, mit einer Wegmessvorrichtung zur Erfassung einer Tor- und/oder Torantriebsstellung und Abgabe eines entsprechenden Torstellungssignals, sowie mit einer Steuereinrichtung zur Ansteuerung des Torantriebs in Abhängigkeit eines Absolutwerts des Torstellungssignals und zumindest eines Referenzpunktes.

Eine Torantriebssteuerung dieser Gattung, die sowohl mit einem Absolutwert des die Torstellung wiedergebenden Wegmesssignals als auch mit Referenzpunkten arbeitet, ist aus der DE 195 22 622 C2 bekannt. Dem darin beschriebenen Torantrieb ist eine Wegmessvorrichtung zugeordnet, die ein Drehpotentiometer besitzt, das entsprechend der Bewegung des Torantriebs gedreht wird. Durch das Potentiometer wird entsprechend der Torbewegung ein periodisches Torstellungssignal abgegeben, dessen Absolutwert - durch die Periodizität des Signals - die Torstellung jedoch nicht eindeutig angibt. Um dennoch zu einer eindeutigen Bestimmung der Torstellung zu kommen, werden die Maxima und Minima des Potentiometersignals gezählt und als virtuelle Referenzpunkte betrachtet. Die Bestimmung der Torstellung erfolgt sodann anhand der gezählten Referenzpunkte sowie dem nach einem jeweiligen Referenzpunkt folgenden Absolutwert des Potentiometersignals. Bei diesem vorbekannten Torantrieb ist jedoch eine relativ komplizierte Auswertung des Potentiometersignals erforderlich. Zum einen müssen Minima und Maxima bestimmt und sodann gezählt werden. Zudem ist die Genauigkeit der Positionsbestimmung und dementsprechend die Feinheit der Ansteuerung des Torantriebes eher begrenzt, da über die Referenzpunkte hinaus die exakte Positionsbestimmung nur anhand des analogen Potentiometersignals erfolgt.

Um eine solche Referenzpunktbestimmung zu vermeiden, ist in, der WO 02/04775 A1 vorgeschlagen, zur Erfassung der Tor- bzw. Torantriebsstellung einen Absolutwertgeber vorzusehen, dessen Signal stets eindeutig die Stellung des Tores wiedergibt. Es wird ein induktiv arbeitender Absolutwertgeber eingesetzt, der die Tor- bzw. Torantriebsstellung in ein stetig monoton steigendes oder stetig monoton fallendes Torstellungssignal abbildet. Zusätzlich zu diesem Absolutwertgeber kann gemäß WO 02/04775 A1 auch ein an sich bekannter Inkrementalgeber eingesetzt werden, der bei einer Torbewegung entsprechende Wegimpulse erzeugt, die sodann gezählt werden, um den Torantrieb entsprechend anzusteuern. Es ist dabei vorgesehen, dass die Steuerung entweder das Absolutwertsignal oder das Inkrementalsignal zur Ansteuerung des Antriebs verwendet. Zwischen dem Absolutwertsignal und dem Inkrementalsignal wird in einem Zeit-Multiplex-Verfahren umgeschaltet. Insbesondere soll bei Torstillstand das Absolutwertsignal des induktiven Absolutwertgebers verwendet werden, während die Steuerung bei Bewegungen des Torantriebs auf die Signale des Inkrementalgebers zurückgreift. Hierbei können jedoch die bei Inkrementalsteuerungen üblichen Betriebsprobleme, wie Fehler bei der Signalzählung, Datenmenge etc., auftreten.

Aus der DE 44 13 098 ist weiterhin ein Messsystem für Linear- bzw. Angularbewegungen bekannt, das eine ermittelte Position überprüft, indem ein mit einem ersten Aufnehmer mechanisch gekoppelter zweiter Aufnehmer vorgesehen ist, der nach einer von der Messmethode des ersten Aufnehmers unterschiedlichen Messmethode arbeitet. Insbesondere wird ein Vergleich der Ergebnisse eines analogen und eines aufsummierten digitalen Signals durchgeführt.

Der vorliegenden Erfindung liegt daher die Aufgabe zugrunde, eine verbesserte Torantriebssteuerung zu schaffen, die Nachteile des Standes der Technik vermeidet und letzteren in vorteilhafter Weise weiterbildet. Vorzugsweise soll mit einer einfachen Signalverarbeitung eine fehlerfreie und feinfühlige Steuerung des Torantriebs ermöglicht werden.

Erfindungsgemäß wird diese Aufgabe durch eine Vorrichtung gemäß Anspruch 1 gelöst. Bevorzugte Ausgestaltungen der Erfindung sind Gegenstand der Unteransprüche.

Im Gegensatz zu dem vorbekannten gattungsgemäßen Stand der Technik, der wie die erfindungsgemäße Lehre - sowohl den Absolutwert eines Torstellungssignals als auch Referenzpunkte zur Ansteuerung des Torantriebs heranzieht, verzichtet die vorliegende Erfindung auf die aufwendige Bestimmung von Signalmaxima und Signalminima sowie die Zählung solcher Maxima bzw. Minima des absoluten Torstellungssignals. Anstatt auf dem absoluten Torstellungssignal in aufwendiger Weise virtuelle Referenzpunkte zu bestimmen, sieht die vorliegende Erfindung zwei separate Signale vor, nämlich einerseits ein absolutes Torstellungssignal sowie ein vorzugsweise digitales Referenzpunktsignal. Die Wegmessvorrichtung ist dreikanalig ausgebildet und umfasst einen Absolutwertgeber zur Abgabe eines Absolutwertsignals auf einem ersten Kanal sowie einen Referenzwertgeber zur Abgabe einer Mehrzahl von Referenzpunktsignalen auf einem zweiten Kanal. Die Steuereinrichtung bestimmt aus beiden Signalen gleichermaßen das Steuersignal zur Ansteuerung des Torantriebes. Ein jeweiliges Referenzpunktsignal wird anhand des zugehörigen, synchron erfassten Absolutwertsignals von anderen Referenzpunktsignalen unterschieden. Von dem jeweils bestimmten Referenzpunkt ausgehend steuert die Steuereinrichtung sodann den Torantrieb an. Durch die kombinierte Verwendung sowohl des Absolutwertsignals als auch des separat erzeugten Referenzpunktsignals ergeben sich verschiedene Möglichkeiten. Zum einen ist es möglich, anders als in der WO 02/04775 A1 auch nicht stetig monotone Absolutwertsignale zu verwenden. Zur eindeutigen Bestimmung der Torstellung muss lediglich sichergestellt sein, dass die Kombination des jeweiligen Referenzpunktsignals und des synchron erfassten absoluten Torstellungssignals eindeutig ist. Hierfür denkbar wäre es, zumindest zwei verschiedene Referenzpunktsignaltypen vorzusehen. Andererseits kann auch mit nur einem einzigen Referenzpunktsignaltyp gearbeitet werden, d.h. bei Überfahren der verschiedenen Referenzpunkte immer das an sich selbe Referenzpunktsignal erzeugt wird, wenn der Absolutwertgeber ein über den gesamten Verfahrweg eindeutig diskretes Absolutwertsignal abgibt. Im Vergleich zur DE 195 22 622 C2 kann durch die Kombination eines Absolutwertsignals mit einem separaten Referenzpunktsignal auf die mühsame Signalauswertung, d.h. die Bestimmung von Maxima und Minima und deren Zählung, verzichtet werden.

Zusätzlich zu dem Absolutwertsignal und dem Referenzpunktsignal werden durch einen Inkrementalgeber auf einem dritten Kanal Wegimpulse bei einer Bewegung des Tores bzw. des Torantriebes erzeugt. Die Steuereinrichtung zählt von einem bestimmten Referenzpunkt aus diese inkrementalen Wegimpulse und steuert den Torantrieb in Abhängigkeit der Anzahl der gezählten Wegimpulse an. Durch die Verwendung dieser drei Wegmesssignale, d.h. sowohl eines Absolutwertsignals, eines Referenzpunktsignals und inkrementaler Wegimpulse, in Kombination miteinander, können die Vorteile der einzelnen Steuerungssysteme erhalten, ihre Nachteile jedoch ausgemerzt werden. Anhand des Absolutwertsignals erfolgt sozusagen eine Grobsteuerung, d.h. die Mehrzahl von Referenzpunkten können in einfacher Weise voneinander unterschieden werden. Zudem spielen die üblichen Probleme von Referenzpunkt- und Inkrementalsteuerungen bei Stromausfall bzw. ausgekuppeltem Handbetrieb des Tores keine Rolle mehr. Die Steuerung weiß stets zumindest grob, in welcher Stellung sich das Tor befindet. Zum anderen wird durch die Wegimpulse des Inkrementalgebers eine Feinsteuerung ermöglicht, die mit der stets begrenzten Auflösung eines Absolutwertsignals alleine niemals erreichbar wäre. Dabei wird durch den Rückgriff auf Referenzpunkte die Verarbeitung der Signale des Inkrementalgebers vereinfacht.

Gemäß einer besonders vorteilhaften Ausführung der Erfindung sind der Absolutwertgeber und der Referenzpunktgeber in einem einzigen Sensor zusammengefasst. Insbesondere kann ein zweikanaliger Wegsensor vorgesehen sein, in dem der genannte Absolutwertgeber und der Referenzpunktgeber integriert sind. Zusätzlich zu diesem zweikanaligen Wegsensor kann ein an sich inkrementaler Wegsignalgeber separat vorgesehen sein.

Als Absolutwertgeber kann in Weiterbildung der Erfindung ein Potentiometer vorgesehen sein, der vorzugsweise über den gesamten Verfahrweg des Tores und/oder des Torantriebes ein eindeutig diskretes Absolutwertsignal abgibt. Als Referenzpunktgeber kann ein Spannungsschalter vorgesehen sein. Die Ausbildung des Absolutwertgebers als Potentiometer und des Referenzpunktgebers als Spannungsschalter ermöglicht es in einfacher Weise, diese beiden Bausteine in einen einzigen Sensor zu integrieren.

Vorteilhafterweise besitzt der Wegsensor ein entsprechend der Tor- und/oder Torantriebsbewegung bewegbares Signalgeberelement, durch das sowohl der Absolutwertgeber als auch der Referenzpunktgeber betätigbar sind. Das Signalgeberelement kann insbesondere zwei Schleifer tragen, von denen der eine eine Potentiometerschaltung und der andere einen Spannungsschalter betätigt.

In vorteilhafter Weiterbildung der Erfindung sind sowohl die Potentiometerschaltung als auch die den Spannungsschalter bildende Schaltung in Form konzentrischer Kreise auf einem Substrat angeordnet, relativ zu dem das genannte Signalgeberelement drehbar gelagert ist. Besagtes Signalgeberelement wird entsprechend der Tor- bzw. Torantriebsbewegung über das Substrat gedreht und betätigt hierbei sowohl die Potentiometerschaltung, die das Absolutwertsignal bereitstellt, als auch die den Spannungsschalter bildende Schaltung, die die Referenzpunkte für die entsprechende Torbewegung ausgibt.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Darstellung eines mit einem Tor gekoppelten Torantriebs sowie einer Vorrichtung zur Steuerung desselben nach einer bevorzugten Ausführung der Erfindung, und
- Fig. 2:: eine schematische Darstellung eines zweikanaligen Wegmesssensors der Vorrichtung zur Steuerung des Torantriebs aus der Fig. 1, wobei in den beiden Graphen unterhalb der Darstellung des Wegmesssensors die Signale der beiden Kanäle des Wegmesssensors über den Verfahrweg dargestellt sind.

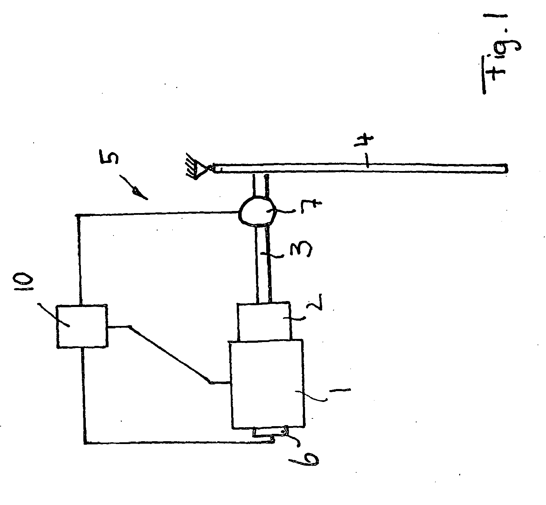

Der in Figur 1 gezeigte Torantrieb 1 kann über ein Untersetzungsgetriebe 2 und einen Antriebsstrang 3 mit einem beweglichen Garagen-, Hallen- oder Gartentor 4 in an sich bekannter Weise gekoppelt sein, wobei das Garten-, Hallen- bzw. Garagentor 4 in verschiedener Art und Weise bewegbar und ausgebildet sein kann, z. B. als Schwenktor, Schiebetor, Sektionaltor und dergleichen.

Wie Figur 1 zeigt, wird die Stellung des Torantriebes 1 und damit des Tores 4 durch eine Wegmesseinrichtung 5 erfasst, die einerseits einen unmittelbar dem Torantrieb 1 zugeordneten Inkrementalgeber 6 sowie einen in den Antriebsstrang 3 geschalteten Wegmesssensor 7 aufweist. Der Wegmesssensor 7 gibt dabei einerseits ein Absolutwertsignal, das über den gesamten Weg des Tores 4 eindeutig diskret ist, sowie andererseits mehrere Referenzpunkte in Signalform ab.

Anhand der Signale des Inkrementalgebers 6 sowie des Wegmesssensors 7 steuert die Steuereinrichtung 10 den Torantrieb 1 an, um das Tor in der Öffnungs- und Schließstellung sowie ggf. weiterer Zwischenstellungen in gewünschter Art und Weise anzuhalten und zwischen diesen Stellungen hin und her zu bewegen.

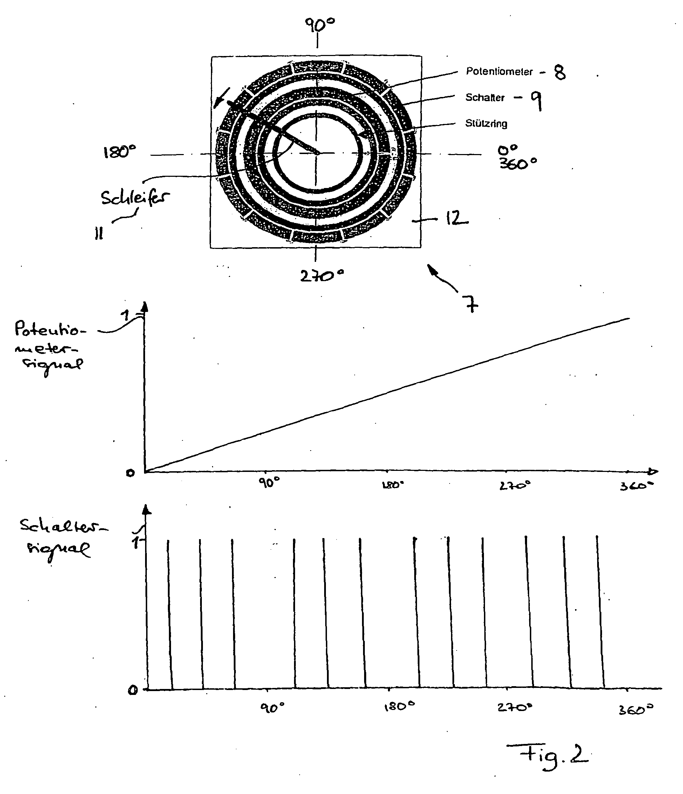

Der Wegmesssensor 7 ist in Figur 2 näher dargestellt. Er ist zweikanalig ausgebildet, wobei der eine Kanal als Absolutwertgeber 8 ausgeführt ist, während der zweite Kanal als Referenzpunktgeber 9 arbeitet. Insbesondere sind in den Wegmesssensor 7 ein Potentiometer, das den Absolutwertgeber 8 bildet, sowie ein Spannungsschalter integriert, der den Referenzpunktgeber 9 bildet.

Der Absolutwertgeber 8 und der Referenzpunktgeber 9 können in Form von jeweils zwei Ringen bzw. Ringsegmenten mit unterschiedlichen Radien und konzentrischer Anordnung auf ein ein Trägersubstrat 12 bildendes Platinenmaterial aufgebracht sein. Das Basismaterial für die ringförmige Beschichtung kann dabei Kupfer sein, welches zusätzlich mit einer Leitschicht versehen wird. Insbesondere können die Ringe zum Schutz vor Korrosion und Abrieb mit einer niederohmigen Schicht Leitpaste versehen werden. Der Widerstandsring des den Absolutwertgeber 8 bildenden Potentiometers kann ebenfalls als Leitpaste aufgetragen werden, vorzugsweise allerdings ohne eine darunter liegende Kupferschicht. Die Dotierung der Leitpaste kann linear mit steigendem Widerstandswert ausgeführt sein.

Jeweils zwei benachbarte Ringe, die einerseits den Absolutwertgeber 8 und andererseits den Referenzpunktgeber 9 bilden, werden mit einem Schleifer aus Metall kurzgeschlossen, wobei der jeweils innen liegende Ring als Kollektor dient. Die Schleifer können an einem gemeinsamen Signalgeberelement 11 angebracht sein, das relativ zu der Ringanordnung drehbar ist, und zwar entsprechend der Torbewegung, so dass die Betätigung des Absolutwertgebers 8 und des Referenzpunktgebers 9 synchron zueinander erfolgen. Dementsprechend kann auch die Auswertung der beiden Signale in der Steuereinrichtung 10 synchron erfolgen.

Die von dem den Absolutwertgeber 8 bildenden Potentiometer und dem den Referenzpunktgeber 9 bildenden Schalter erzeugten Signale sind in den beiden Graphen in Figur 2 dargestellt. Das Potentiometersignal ist vorzugsweise über den Weg des Torantriebs bzw. Tores linear ansteigend. Die Signale des Referenzpunktgebers 9 sind diskrete digitale Referenzpunktsignale. Der in Figur 2 dargestellte Wegmesssensor 7 ist derart ausgebildet und derart mit dem Torantrieb 1 bzw. dem Tor 4 gekoppelt, dass sich das Signalgeberelement 11 und die daran befestigten Schleifer von der Torauf- bis zur Torzustellung um etwas weniger als 360° dreht, d.h. der gesamte Torantriebsweg in eine Drehung von weniger als 360° abgebildet wird. Das Potentiometersignal des Wegmesssensors 7 erlaubt bei entsprechender Beschaltung eine Grobbestimmung der Torlage, wobei diese Information stets unmittelbar nach dem Einschalten des Versorgungsnetzes zur Verfügung steht und sicherstellt, dass keine gefährlichen Fahrten durch Überfahren der Endlagen stattfinden können. Die Feinauflösung und damit wegbestimmende Information wird durch das Schaltersignal des Wegmesssensors 7 in Kombination mit den drehzahlabhängigen Impulsen des Inkrementalgebers 6 gewonnen, der mit dem Torantrieb 1 gekoppelt ist. Die Drehzahlimpulse werden von einem bestimmten Referenzpunkt ausgehend gezählt und durch Soll/Ist-Vergleich wird das Erreichen einer gewünschten Torstellung bestimmt, insbesondere die offene und die geschlossene Endstellung sowie ggf. bestimmte Zwischenpositionen. Das Schaltersignal des Wegmesssensors 7 dient als Eichmarke für die Wegmesseinrichtung 5.

Vorteilhafterweise benötigt das System keine Justage bzw. Einstellung der Wegmessvorrichtung, da ein beliebiger Bereich des Potentiometers genutzt werden kann. Es ist ein Überlauf über die in Figur 2 eingezeichnete 0°- bzw. 360°-Stellung erlaubt. Solange der gesamte Weg kleiner als 360° ist, kann ein beliebiger Anfangs- und Endpunkt definiert bzw. verwendet werden. Im Gegensatz zum Stand der Technik muss das Potentiometersignal nicht stetig, d.h. stetig steigend oder stetig fallend, sein.

## Patentansprüche

1. Vorrichtung zur Steuerung eines Torantriebs (1), mit einer Wegmessvorrichtung (5) zur Erfassung einer Tor- und/oder Torantriebsstellung und Abgabe eines entsprechenden Torstellungssignals, sowie mit einer Steuereinrichtung (10) zur Ansteuerung des Torantriebs (1) in Abhängigkeit eines Absolutwerts des Torstellungssignals und zumindest eines Referenzpunktes, **dadurch gekennzeichnet, dass** die Wegmessvorrichtung (5) dreikanalig ausgebildet ist und einen Absolutwertgeber (8) zur Abgabe eines Absolütwertsignals auf einem ersten Kanal sowie einen Referenzwertgeber (9) zur Abgabe einer Mehrzahl von Referenzpunktsignalen auf einem zweiten Kanal umfasst, wobei die Steuereinrichtung (10) ein jeweiliges Referenzpunktsignal anhand des zugehörigen Absolutwertsignals von anderen Referenzpunktsignalen unterscheidet und von einem bestimmten Referenzpunkt ausgehend den Torantrieb (1) steuert, und wobei die Wegmessvorrichtung (5) einen Inkrementalgeber (6) zur Abgabe inkrementaler Wegimpulse auf einem dritten Kanal aufweist, wobei die Steuereinrichtung (10) von zumindest einem bestimmten Referenzpunkt aus die Wegimpulse des Inkrementalgebers (6) zählt und den Torantrieb (1) in Abhängigkeit der Anzahl der gezählten Wegmessimpulse ansteuert.

2. Vorrichtung nach dem vorhergehenden Anspruch, wobei die Wegmessvorrichtung (5) ein zweikanaliges Wegsensorelement (7) umfasst, in das der Absolutwertgeber (8) und der Referenzpunktgeber (9) integriert sind.

3. Vorrichtung nach einem der vorhergehenden Ansprüche, wobei der Absolutwertgeber (8) ein Potentiometer umfasst, das vorzugsweise über den gesamten Verfahrweg des Tores und/oder des Torantriebs ein eindeutig diskretes Absolutwertsignal abgibt.

4. Vorrichtung nach einem der vorhergehenden Ansprüche, wobei der Referenzpunktgeber (9) einen Spannungsschalter umfasst.

5. Vorrichtung nach den Ansprüchen 3, 4 und 5, wobei das Wegsensorelement (7) ein entsprechend der Tor- und/oder Torantriebsbewegung bewegbares Signalgeberelement (11) aufweist, durch das sowohl der Absolutwertgeber (8) als auch der Referenzpunktgeber (9) betätigbar sind.

6. Vorrichtung nach dem vorhergehenden Anspruch, wobei an dem Signalgeberelement (11) zwei Schleifer vorgesehen sind, von denen der eine eine Potentiometerschaltung und der andere eine einen Spannungsschalter bildende Schaltung betätigt.

7. Vorrichtung nach dem vorhergehenden Anspruch, wobei die Potentiometerschaltung und die den Spannungsschalter bildende Schaltung in Form konzentrischer Kreisringe oder Kreisringsegmente auf einem Substrat angeordnet sind und das Signalgeberelement (11) relativ zu dem Substrat drehbar gelagert ist.

## Claims

1. Device for control of a door operator (1), with a distance measuring device (5) for detecting a door position and/or door operator position and provision of a corresponding door position signal, as well as with a control device (10) for control of the door operator (1) depending on an absolute value of the door position signal and at least one reference point, **characterised in that** the distance measuring device (5) is arranged in three channels, and includes an absolute value encoder (8) for provision of an absolute value signal on a first channel, as well as a reference value encoder (9) for provision of a plurality of reference point signals on a second channel, whereby the control device (10) differentiates a respective reference point signal from other reference point signals by means of the associated absolute value signal, and controls the door operator (1) from a certain reference point, and whereby the distance measuring device (5) comprises an incremental encoder (6) for provision of incremental distance pulses on a third channel, whereby the control device (10) counts the distance pulses of the incremental encoder from at least one designated reference point, and controls the door operator (1) depending on the number of distance measuring pulses counted.

2. Device according to the preceding claim, whereby the distance measuring device (5) includes a distance sensor element (7) with two channels, into which the absolute value encoder (8) and the reference point encoder (9) are integrated.

3. Device according to any one of the preceding claims, whereby the absolute value encoder (8) includes a potentiometer, which preferably delivers a clear discrete absolute value signal over the whole movement range of the door and/or the door operator.

4. Device according to any one of the preceding claims, whereby the reference point encoder (9) includes a supply switch.

5. Device according to claims 3, 4 and 5, whereby the distance sensor element (7) comprises a moveable signal generator element (11) corresponding to the door and/or door operator movement, by means of which both the absolute value encoder (8) and the reference point encoder (9) can be actuated.

6. Device according to the preceding claim, whereby two sliders are provided on the signal generator element (11), of which one actuates a potentiometer switch and the other actuates a switch forming a supply switch.

7. Device according to the preceding claim, whereby the potentiometer switch and the switch forming the supply switch are arranged in the form of concentric annular rings on a substrate, and the signal generator element (11) is rotatably mounted relative to the substrate.

## Revendications

1. Dispositif de commande d'un entraînement de porte (1), avec un dispositif de mesure de trajet (5) pour la détection d'une position de porte et/ou d'entraînement de porte et pour l'émission d'un signal de position de porte correspondant, et avec une installation de commande (10) pour la commande de l'entraînement de porte (1) en fonction d'une valeur absolue du signal de position de porte et au moins d'un point de référence, **caractérisé en ce que** le dispositif de mesure de trajet (5) est réalisé avec trois canaux et comprend un indicateur de valeur absolue (8) pour l'émission d'un signal de valeur absolue sur un premier canal ainsi qu'un indicateur de valeur de référence (9) pour l'émission d'une pluralité de signaux de points de référence sur un deuxième canal, où l'installation de commande (10) distingue un signal de point de référence respectif à l'aide du signal de valeur absolue associé d'autres signaux de point de référence et, en partant d'un point de référence déterminé, commande l'entraînement de porte (1), et où le dispositif de mesure de trajet (5) comprend un indicateur incrémentiel (6) pour l'émission d'impulsions de trajet incrémentielles sur un troisième canal, où l'installation de commande (10) compte à partir d'un point de référence déterminé les impulsions de trajet de l'indicateur incrémentiel (6) et commande l'entraînement de porte (1) en fonction du nombre des impulsions de mesure de trajet comptées.

2. Dispositif selon la revendication précédente, où le dispositif de mesure de trajet (5) comprend un élément de capteur de trajet (7) avec deux canaux, dans lequel sont intégrés l'indicateur de valeur absolue (8) et l'indicateur de point de référence (9).

3. Dispositif selon l'une des revendications précédentes, où l'indicateur de valeur absolue (8) comprend un potentiomètre qui émet de préférence sur tout le trajet de déplacement de la porte et/ou de l'entraînement de porte un signal de valeur absolue clairement discret.

4. Dispositif selon l'une des revendications précédentes, où le capteur de point de référence (9) comprend un commutateur de tension.

5. Dispositif selon les revendications 3, 4 et 5, où l'élément de capteur de trajet (7) présente un élément générateur de signaux (11) déplaçable conformément au déplacement de la porte et/ou de l'entraînement de porte, par lequel à la fois l'indicateur de valeur absolue (8) et aussi l'indicateur de point de référence (9) sont actionnables.

6. Dispositif selon la revendication précédente, où sont prévus à l'élément générateur de signaux (11) deux curseurs, dont un actionne un montage de potentiomètre et l'autre un montage formant un commutateur de tension.

7. Dispositif selon la revendication précédente, où le montage de potentiomètre et le montage formant le commutateur de tension sont disposés sous la forme d'anneaux circulaires concentriques ou de segments d'anneaux circulaires sur un substrat, et l'élément générateur de signaux (11) est logé d'une manière tournante relativement au substrat.
